# EUROPÄISCHE PATENTSCHRIFT

(11) **EP 0 759 728 B1**
(45) Veröffentlichungstag und Bekanntmachung des Hinweises auf die Patenterteilung: **08.10.1997**
(21) Anmeldenummer: 95919404.4
(22) Anmeldetag: 05.05.1995
(51) Int. Cl.: A61C 5/10, A61C 13/00

(54) **VERFAHREN UND VORRICHTUNG ZUR HERSTELLUNG EINER DENTALPROTHESE**
METHOD AND DEVICE FOR MANUFACTURING A DENTAL PROSTHESIS
PROCEDE ET DISPOSITIF DE FABRICATION D'UNE PROTHESE DENTAIRE

(30) Priorität: 05.05.1994 DE 9407491 U; 11.10.1994 DE 4436231
(43) Veröffentlichungstag der Anmeldung: 05.03.1997
(73) Patentinhaber: Hintersehr, Joseph, 64347 Griesheim (DE)
(72) Erfinder: Hintersehr, Joseph, 64347 Griesheim (DE)
(74) Vertreter: Zinngrebe, Horst, Dr.rer.nat.
(86) Internationale Anmeldenummer: EP9501708
(87) Internationale Veröffentlichungsnummer: WO9530382

(56) Entgegenhaltungen:
- EP-A- 0 391 446
- EP-A- 0 455 854
- WO-A-91/06256

## Beschreibung

Die Erfindung betrifft ein Verfahren zur Herstellung einer Dentalprothese, insbesondere Krone, aus einem Rohling, der in ein Futter einer Bearbeitungsmachine eingespannt und bearbeitet wird, sowie eine Vorrichtung zur Durchführung des Verfahrens.

Bei der Herstellung von Dentalprothesen - Endoprothesen oder Exoprothesen - werden Rohlinge aus Kunststoffen, Keramiken oder Metallegierungen, beispielsweise Titanlegierungen (TIAl6N, TiAl6N, TiAl6Nb), verwendet, die in ein Futter einer Bearbeitungsmaschine eingespannt und sodann in dieser maschinell bearbeitet werden. Bei dieser Bearbeitung wird beispielsweise mittels eines Fräsers eine Krone, Brücke, Inlay, Geschiebe oder Implantat nach den jeweils speziellen ärztlichen Vorgaben aus dem Rohling herausgearbeitet.

Dazu muß die Außenabmessung des Rohlings wenigstens in Einspannrichtung so groß gewählt werden, daß nicht nur ein Kontakt des hochempfindlichen Bearbeitungswerkzeugs mit dem Futter oder sonstigen Teilen der Bearbeitungsmaschine sicher ausgeschlossen bleibt, sondern darüßerhinaus ein sicherer Halt des Rohlings in dem Futter vor allen in den Endphasen der Bearbeitung erhalten bleibt. Diese Notwendigkeit hat zur Folge, daß nach fertiggestellter Prothese ein hoher Ansteil des Rohlings dem Abfall anheim fällt. Bei Rohlingen, die aus einem sehr teuren Werkstoff, wie beispielsweise die erwähnten Metallegierungen oder Edelmetallen bestehen, entfällt ein hoher Anteil der Rohlingskosten auf den verbleibenden, für die Prothese nicht mehr verwendbaren Rückstand. Edelmetallreste lassen sich zwar wieder einschmelzen und einer Verwendung zuführen, was jedoch bei Metallegierungen nicht möglich ist.

Der Erfindung liegt daher die Aufgabe zugrunde, ein Verfahren zur Herstellung einer Dentalprothese und eine dazu geeignete Vorrichtung anzugeben, bei welchem weniger Rohling-Abfall anfällt.

Dazu sieht die Erfindung vor, daß der Rohling in einen Ring mittig eingebettet und Ring mit Rohling in das Futter eingespannt wird. Damit kann jener Teil der bisherigen Rohlinge, der zur Aufnahme der Spannkräfte dient, nach der Erfindung aus einem anderen preiswerteren Werkstoff bestehen, so daß die Außenabmessung des Rohlings wesentlich kleiner gehalten werden kann und damit weniger Abfall an wertvollem Dentalmaterial anfällt.

Für die Einbettung des Rohlings in den Ring empfehlen sich mehrere Möglichkeiten. So kann der Ring auf den Rohling aufgeschrumpft werden. Alternativ kann der Rohling in den Ring mittels eines Dentalklebers, eines aushärtenden Kunststoffes, einer Keramikmasse, Zement oder dergleichen eingebettet werden.

Die erfindungsgemäße Vorrichtung zur Herstellung einer Dentalprothese besteht aus einem Rohling, dessen Außenabmessungen nicht größer sind als zum Herausarbeiten der Prothese erforderlich ist und der in einen Ring aus Metall, Keramik oder hartem Kunststoff eingebettet ist.

Weitere Ausgestaltungen der Erfindung sind in der Unteransprüchen angegeben.

Die Erfindung wird nachstehend anhand des in der beigefügten Zeichnung dargestellten Ausführungsbeispiel im einzelnen beschrieben. Es zeigt:
- Fig. 1: die Draufsicht auf ein Futter;
- Fig. 2: die Draufsicht auf ein Futter mit eingesetztem Rohling;
- Fig. 3: eine Draufsicht, Seitenansicht und perspektifische Darstellung eines Rohlings nach dem Stand der Technik;
- Fig. 4: eine Draufsicht, Seitenansicht und perspektifische Darstellung eines Ringes;
- Fig. 5: eine Schnittansicht eines in den Ring nach Figur 4 eingesetzten Rohlings;
- Fig. 6: eine weitere Darstellung zur Erläuterung der Erfindung.

Das Futter 1 einer nicht dargestellten Bearbeitungsmaschine, beispielsweise einer rechnergesteuerten Fräsmaschine, besteht aus einer massiven Stahlplatte, welche zwei weit auseinander liegende Positionierbohrungen 2, 3 aufweist. An der Aufnahmeplatte der Bearbeitungsmaschine sitzen an die Positionierbohrungen 2, 3 angepaßte Stifte, die beim positionsgenauen Aufsetzen des Futters 1 auf die Aufnahme der Bearbeitungsmachine in die Positionierbohrungen klemmend eindringen und das Futter 1 exakt positionieren. Ferner sind weitere Bohrungen 4, 5 in dem Futter 1 vorhanden, durch welche Bolzen zum Festschrauben des Futters an der Bearbeitungsmaschine durchdringen können.

Das Futter 1 besitzt eine mittige kreisrunde Aufnahmeöffnung 10 mit zwei radial einwärts vorstehenden und in Umfangsrichtung beabstandeten Anlagenasen 11, 12, an die sich ein noch zu beschreibender in die Aufnahmeöffnung 10 eingesetzter Ring 20 anlegen kann. Ferner besitzt das Futter 1 ein radial verstellbares Andruckstück 13, welches in dem Futter radial gegenüber den Anlagenasen 11, 12 radial beweglich gelagert ist und durch Drehen eines Schraubkopfes 15 auf den Ring 20 zugestellt werden kann.

Der Ring 20, der im hier beschriebenen Ausführungsbeispiel der Erfindung aus Werkzeugstahl besteht, aber auch aus hartem Kunststoff oder einem anderen Werkstoff bestehen kann, hat einen Außendurchmesser, der etwas kleiner als die lichte Weite der Aufnahmeöffnung 10 ist. In die Innenfläche 22 des Ringes 20 ist eine endlose Ringnut 24 eingeschnitten.

Ein Rohling 30, aus dem eine Dentalprothese, beispielsweise eine Krone hergestellt werden soll, besitzt schlanke zylindrische Form, deren Durchmesser wesentlich kleiner als die lichte Weite des Ringes 20 ist. Der Rohling 30 kann aus einer Titanlegierung, aus einem gesinterten Zirkonoxid oder einem anderen für Dentalprothesen geeigneten Material bestehen. Die Form der aus dem Rohling 30 herauszuarbeitenden Krone ist durch die in den Rohling 30 eingezeichnete Kurve 32 angedeutet und bestimmt sich in ihrer Form nach den Vorgaben des Zahnarztes.

Zur Herstellung einer derartigen Prothese ist bislang ein Rohling 40 verwendet worden, der aus einem zylindrischen Unterteil 42 und einem zylindrischen Oberteil 44 besteht. Der Außendurchmesser des Unterteils 42 ist etwas kleiner als die lichte Weite der Aufnahmeöffnung 10, und das Oberteil 44 hat gegenüber dem Unterteil 42 einen wesentlich reduzierten Außendurchmesser. Zum Herausarbeiten einer Krone 32 aus dem Oberteil 44 des Rohlings 40 wurde der Rohling 40 in die Aufnahmeöffnung 10 eingelegt und durch Anziehen des Schraubkopfes 15 mittels des Andruckstückes 13 in der Aufnahmeöffnung 10 mittig fixiert. Nach Herausfräsen der Krone 32 aus dem Rohling 40 verbleibt vor allem das Unterteil 42 als nicht mehr verwertbar zurück.

Bei der erfindungsgemäßen Herstellung der Krone 32 wird der Rohling, dessen Außendurchmesser etwa demjenigen des Oberteils 44 entspricht, mittig in die Durchgangsöffnung des Ringes 20 eingesetzt und in der Öffnung durch Einbringen eines Dentalklebers in den ringförmigen Zwischenraum zwischen der Außenfläche des Rohlings 30 und der Innenfläche 22 sowie der Nut 24 des Ringes 20 fixiert. Nach Aushärten des Dentalklebers 34 wird die aus Ring 20, Dentalkleber 34 und Rohling 30 bestehende Einheit in die Aufnahmeöffnung 10 des Futters 1 in Anlage an die Nasen 11, 12 eingelegt und durch Anziehen der Schraube 15 mittels des Andruckstückes 13 in der Aufnahmeöffnung 10 mittig eingespannt.

Als Dentalkleber eignet sich beispielsweise der von Ciba-Geigy, Basel, Schweiz vertriebene Aralthitkleber. Es können jedoch auch hart aushärtende Kunststoffe sowie Keramikmassen oder Zement als Mittel zum Verankern des Rohlings 30 im Ring 20 eingesetzt werden.

Das Verhältnis des Außendurchmessers des zylinderförmigen Rohlings 30 zu dem Innendurchmesser (lichten Weite) des Ringes 20 und damit die radiale Stärke des Dentalklebers 34 bestimmt sich nach den Erfordernissen der Bearbeitung des Rohlings 30 durch die Bearbeitungsmaschine. Es muß sichergestellt sein, daß beispielsweise bei der Bearbeitung des Rohlings 30 mittels eines Fräsers zuverlässig vermieden wird, daß der empfindliche Fräser den Ring 20 kontaktiert. Selbstverständlich können in einen Ring 20 mittels des Dentalklebers 34 auch Rohlinge 30 eingesetzt werden, deren Außendurchmesser viel kleiner ist als nach dem genannten Erfordernis zulässig wäre.

Die die Verankerung des Dentalklebers 34 im Ring 20 unterstützende Ringnut 24 kann beispielsweise dadurch ersetzt werden, daß die glatte Innenfläche 22 des Ringes 20 mit einer haftverbessernden Beschichtung versehen oder einfach nur aufgerauht ist. Es versteht sich ferner, daß der Rohling 30 mittels geeigneter Lehren genau zentrisch in den Ring 20 und dieser mit dem eingebrachten Rohling 30 genau zentrisch in die Aufnahmeöffnung des Futters eingefügt werden, um das rechnergestützte Herausarbeiten der Krone 32 aus dem Rohling 30 sicherzustellen.

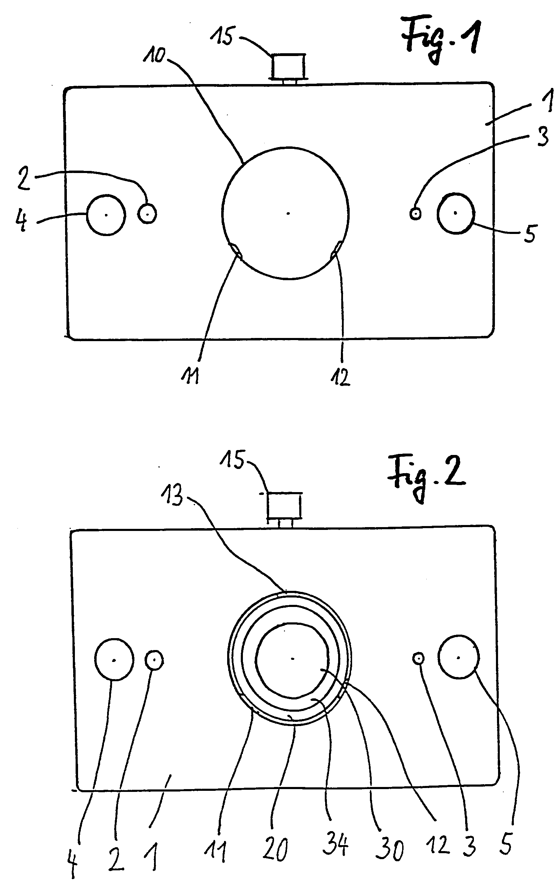

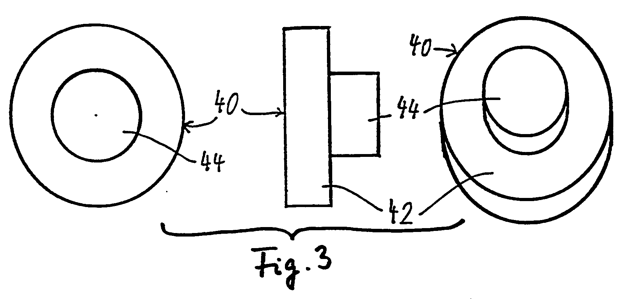

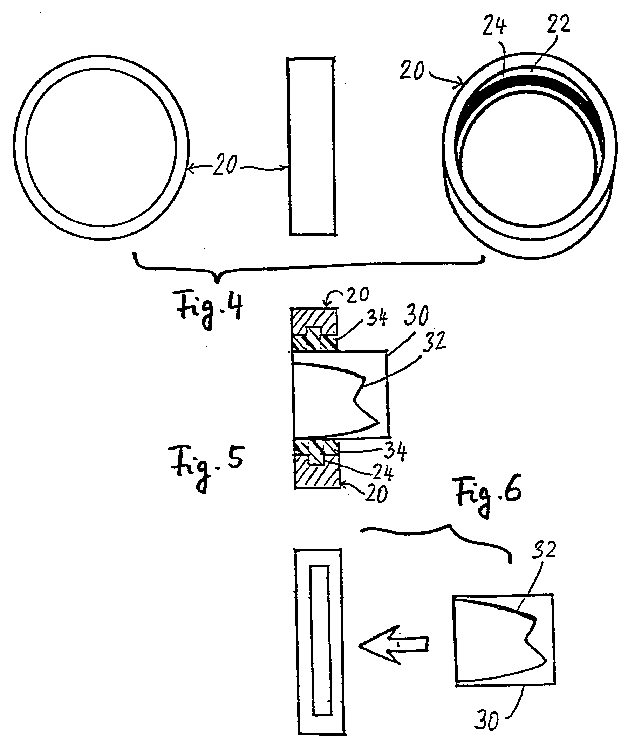

Nach vollendeter Herstellung der Krone 32 wird durch Vergleich der Figuren 3 und 5, 6 deutlich, daß der verbleibende Abfall bei der erfindungsgemäßen Herstellung relativ wertlos ist und aus dem Ring 20 mit Dentalkleber 34 besteht, so daß ein wesentlicher Teil des bisher zu verwerfenden, teuren Rohlings, nämlich dessen unterer Abschnitt 42 eingespart werden kann.

## Patentansprüche

1. Verfahren zur Herstellung einer Dentalprothese, insbesondere Krone, aus einem Rohling, der in ein Futter eingespannt und bearbeitet wird, dadurch gekennzeichnet, daß der Rohling (30) in einen Ring (20) eingebettet und Ring (20) mit Rohling (30) in das Futter (1) eingespannt wird.

2. Verfahren nach Anspruch 1, dadurch gekennzeichnet, daß der Ring (20) auf den Rohling (30) aufgeschrumpft wird.

3. Verfahren nach Anspruch 1, dadurch gekennzeichnet, daß der Rohling (30) in den Ring (20) mittels eines Dentalklebers (34), eines Kunststoffs, Zements, einer Keramikmasse oder dergleichen eingebettet wird.

4. Verfahren nach einem der vorstehenden Ansprüche, dadurch gekennzeichnet, daß als Rohling (30) ein Edelmetall, eine Titanlegierung, gesintertes Zirkonoxid oder dergleichen eingesetzt wird.

5. Verfahren nach einem der vorstehenden Ansprüche, dadurch gekennzeichnet, daß als Ring (20) Werkzeugstahl oder harter Kunststoff verwendet wird.

6. Vorrichtung umfassend einen Rohling (30) zur Herstellung einer Dentalprothese, insbesondere Krone, dadurch gekennzeichnet, daß der Rohling (30), dessen Außenabmessungen nicht größer sind als zum Herausarbeiten der Dentalprothese erforderlich ist, in einen Ring (20) aus Metall, Keramik oder hartem Kunststoff eingebettet ist.

7. Vorrichtung nach Anspruch 6, dadurch gekennzeichnet, daß der Ring (20) auf den Rohling (30) aufgeschrumpft ist.

8. Vorrichtung nach Anspruch 6, dadurch gekennzeichnet, daß der Rohling (30) in den Ring (20) mittels eines Dentalklebers (34), eines Kunststoffes, Zements oder dergleichen eingebettet ist.

9. Vorrichtung nach einem der Ansprüche 6 bis 8, dadurch gekennzeichnet, daß der Rohling (30) aus einem Edelmetall, einer Titanlegierung, einem gesinterten Zirkonoxid oder dergleichen besteht.

10. Vorrichtung nach einem der Ansprüche 6 bis 9, dadurch gekennzeichnet, daß die Innenfläche (22) des Ringes (20) eine endlose Ringnut (24) aufweist.

11. Vorrichtung nach einem der Ansprüche 6 bis 10, dadurch gekennzeichnet, daß die Innenfläche (22) des Ringes (20) mit einer haftverbessernden Beschichtung versehen oder aufgerauht ist.

## Claims

1. Method for manufacturing a dental prosthesis, in particular a crown, from a blank which is clamped and machined in a chuck of a machine tool, characterized therein that the blank (30) is imbedded in a ring (20) and the ring (20) is clamped with the blank (30) in the chuck (1).

2. Method according to claim 1, characterized therein that the ring (20) is schrunk on the blank (30).

3. Method according to claim 1, characterized therein that the blank (30) is imbedded in the ring (20) by means of a dental bonding agent (34), plastics, cement, ceramics or the like.

4. Method according to one of the preceding claims, characterized therein that a precious metal, a titanium alloy, sintered zircon or the like is used for the blank (30).

5. Method according to one of the preceding claims, characterized therein that tool steel or hard plastics is used for the ring (20).

6. Device comprising a blank (30) for manufacturing a dental prosthesis, in particular a crown, characterized therein that the blank (30), the external dimensions of which are no larger than necessary for machining the dental prosthesis, is imbedded in a ring (20) made of metal, ceramics or hard plastics.

7. Device according to claim 6, characterized therein that the ring (20) is shrunk on the blank (30).

8. Device according to claim 6, characterized therein that the blank (30) is imbedded in the ring (20) by means of a dental bonding agent (34), plastics, cement or the like.

9. Device according to one of claims 6 to 8, characterized therein that the blank (30) is made of a precious metal, a titanium alloy, sintered zircon or the like.

10. Device according to one of claims 6 to 9, characterized in that the internal surface (22) of the ring (20) shows an endless snap ring groove (24).

11. Device according to one of claims 6 to 10, characterized in that the internal surface (22) of the ring (20) is coated for better adherence or roughened.

## Revendications

1. Procédé de fabrication d'une prothèse dentaire, en particulier d'une couronne, à partir d'un moule encastré dans un mandrin et usiné, caractérisé en ce que le moule (30) est logé dans un anneau (20) et que l'anneau (20) est encastré avec le moule (30) dans le mandrin (1).

2. Procédé selon la revendication 1, caractérisé en ce que l'anneau (20) est posé à chaud sur le moule (30).

3. Procédé selon la revendication 1, caractérisé en ce que le moule (30) est logé dans l'anneau (20) au moyen d'une colle dentaire (34), de matière plastique, de ciment, d'une masse en céramique ou autre semblable.

4. Procédé selon l'une des revendications précédentes, caractérisé en ce que l'on utilise un métal précieux, un alliage en titane, du zircon aggloméré ou autre semblable pour le moule (30).

5. Procédé selon l'une des revendications précédentes, caractérisé en ce que l'on utilise de l'acier à outils ou une matière plastique dure pour l'anneau (20).

6. Dispositif comprenant un moule (30) pour la fabrication d'une prothèse dentaire, en particulier d'une couronne, caractérisé en ce que le moule (30), dont les dimensions externes ne sont pas plus grandes que nécessaire pour façonner la prothèse dentaire, est logé dans un anneau (20) en métal, céramique ou matière plastique dure.

7. Dispositif selon la revendication 6, caractérisé en ce que l'anneau (20) est posé à chaud sur le moule (30).

8. Dispositif selon la revendication 6, caractérisé en ce que le moule (30) est logé dans l'anneau (20) au moyen d'une colle dentaire (34), d'une matière plastique, de ciment ou autre semblable.

9. Dispositif selon l'une des revendications 6 à 8, caractérisé en ce que le moule (30) consiste en un métal précieux, un alliage en titane, du zircon aggloméré ou autre semblable.

10. Dispositif selon l'une des revendications 6 à 9, caractérisé en ce que la surface interne (22) de l'anneau (20) présente une rainure pour anneau de retenue (24) sans fin.

11. Dispositif selon l'une des revendications 6 à 10, caractérisé en ce que la surface interne (22) de l'anneau (20) est munie d'un revêtement améliorant l'adhérence ou est rendu rugueux.
